# EUROPÄISCHE PATENTSCHRIFT

(11) **EP 1 572 328 B1**
(45) Veröffentlichungstag und Bekanntmachung des Hinweises auf die Patenterteilung: **16.11.2011**
(21) Anmeldenummer: 02795214.2
(22) Anmeldetag: 17.12.2002
(51) Int. Cl.: B01D 61/08, B01D 61/10, B01D 61/12

(54) **UMKEHROSMOSEANLAGE**
REVERSE OSMOSIS SYSTEM
DISPOSITIF D'OSMOSE INVERSE

(43) Veröffentlichungstag der Anmeldung: 14.09.2005
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus
(86) Internationale Anmeldenummer: PCT/EP2002/014408
(87) Internationale Veröffentlichungsnummer: WO 2004/054691

(56) Entgegenhaltungen:
- EP-A- 0 599 281
- DE-A- 4 331 102
- DE-A- 19 520 917
- DE-A- 19 748 997
- DE-C- 19 818 692
- DE-C- 19 922 628
- US-A- 5 403 490
- US-B1- 6 461 514

## Beschreibung

Die Erfindung betrifft eine Umkehrosmoseanlage gemäß dem Oberbegriff des Patentanspruches 1.

Durch ein Umkehrosmoseverfahren kann Wasser nahezu vollständig entsalzt werden. Der Vorteil dieses Verfahrens liegt vor allem in der geringen Umweltbelastung. Für dieses Verfahren sind keinerlei Chemikalien erforderlich.

Das auf diese Weise entsalzte Wasser wird insbesondere in der Industrie, Pharmazie und in Krankenhäusern verwendet. Auch für die Luftbefeuchtung in Lüftungs- und Klimaanlagen wird oftmals Wasser verwendet, das zuvor in einer Umkehrosmoseanlage entsalzt worden ist. Weiterhin können Umkehrosmoseanlagen für die Aufbereitung von Meerwasser.verwendet werden. Meerwasser ist wegen des hohen Salzgehalts als Trinkwasser ungeeignet. Mit Hilfe einer Umkehrosmoseanlage kann der Salzgehalt von Meerwasser soweit reduziert werden, dass es als Trinkwasser geeignet ist. Solche Anlagen werden insbesondere in Küstenregionen mit wenig oder keinem Süßwasservorkommen benötigt.

Aus dem Stand der Technik ist eine Umkehrosmoseanlage bekannt, der eine Enthärtungsanlage vorgeschaltet ist. In dieser Enthärtungsanlage wird Rohwasser auf weniger als 1°dH entkalkt. Der Ausgang der Enthärtungsanlage ist mit dem Eingang der Umkehrosmoseanlage gekoppelt Die Umkehrosmoseanlage weist am Eingang eine Pumpe auf, die das enthärtete Wasser mit einem Druck von etwa 10 bar bis 80 bar durch Module presst. In diesen Modulen findet das eigentliche Umkehrosmoseverfahren statt, indem das Wasser mit Druck gegen halbdurchlässige Membranen gepresst wird. Dabei werden Salze und/oder Mineralien ausgefiltert. Das Rohwasser spaltet sich in ein Permeat (Diluat) und ein Konzentrat auf. Das Permeat wird als besonders salzarmes Wasser für zahlreiche Anwendungen eingesetzt. Das Konzentrat ist ein Abfallprodukt und wird verworfen. Üblicherweise produziert ein Modul in etwa 75% Permeat und 25% Konzentrat. Bei der herkömmlichen Umkehrosmoseanlage sind der Pumpendruck sowie die Permeat- und Konzentratmenge manuell einstellbar. Das Permeat wird üblicherweise in einem drucklosen Behälter gespeichert und von dort an einen Endverbraucher weitergepumpt.

Die herkömmliche Umkehrosmose-Anlage hat den Nachteil, dass das Wasser im drucklosen Behälter aufkeimen kann. Dies ist insbesondere darauf zurückzuführen, dass der Behälter niemals ganz dicht ist und das Wasser oftmals längere Zeit im Behälter verbleibt. Durch eine Erwärmung des Wassers im drucklosen Behälter, insbesondere im Sommer, wird das Aufkeimen zusätzlich gefördert. Herkömmlicherweise werden zur Verhinderung der Verkeimung UV-Lampen, Chemikalien oder zusätzliche Leitungen verwendet. Dadurch werden jedoch der energetische und konstruktive Aufwand sowie die Umweltbelastung erhöht. Außerdem hat die herkömmliche Umkehrosmose-Anlage, aufgrund des drucklosen Behälters einen verhältnismäßig hohen Platzbedarf.

Ein weiterer bedeutender Nachteil wird durch die Einschaltphase bei der herkömmlichen Umkehrosmoseanlage bewirkt. Während dieser Einschaltphase hat das Wasser einen höheren Leitwert, etwa 150 bis 200 µS/cm, als erwünscht. Schließlich hat die manuelle Einstellung wichtiger Größen unerwünschte Ungenauigkeiten zur Folge.

Ein weiterer Nachteil herkömmlicher Umkehrosmoseanlagen ist, dass der Salzgehalt am Ausgang der Anlage nicht regelbar ist.

Eine Umkehrosmoseanlage, bei der der Salzgehalt am Ausgang der Anlage einstellbar ist, ist aus der DE 197 48 997 A1 bekannt. Dort wird - auch zur Überwindung des höheren Salzgehaltes in der Einschaltphase - eine Permeatrückführung propagiert, wobei das Permeat solange an den Vorlauf der Pumpe rückgeführt wird, bis die Leitfähigkeit - ermittelt durch einen Leitfähigkeitssensor - einen Grenzwert unterschreitet. Allerdings wird bei der dort vorgeschlagenen Anlage das salzarme Permeat nicht direkt dem Verbraucher zur Verfügung gestellt, sondern in einem Speicher zwischengespeichert. Insofern entsteht die Problematik, dass das bereits aufbereitete Wasser im Behälter aufkeimen kann.

In der EP 0 599 281 wird ebenfalls eine Umkehrosmoseanlage mit einer Pumpe und einer Permeatausgangsleitung vorgeschlagen, wobei eine Permeatrückflussleitung mit einem Permeatrückflussventil vorgeschlagen wird, das als Druckhalteventil ausgebildet ist, so dass damit der in der Permeatausgangsleitung herrschende Druck eingestellt werden kann. Dort wird allerdings ein pulsierender Strom innerhalb der Permeat- bzw. der Konzentratrückführung propagiert. Eine stetige Einstellung des Permeatflusses in Abhängigkeit von Druckwerten in der Permeatausgangsleitung lässt sich dem Stand der Technik nicht entnehmen.

Auch aus der DE 195 20 917 A1 ist es bekannt, einen Permeatrückfluss zur Rückführung von überschüssig erzeugtem, nicht benötigtem Permeat in den Rohwasserzufluss vorzusehen. Aus der DE 197 48 997 ist eine Umkehrosmoseanlage bekannt, wobei auch dort eine Permeatrückführung vorgesehen ist. Das erzeugte Permeat wird in einem Druckspeicher für entsprechende Verbraucher bereitgehalten, so dass auch hier das Problem der Verkeimung des bereits aufbereiteten Wassers besteht.

Es ist Aufgabe der Erfindung, eine Umkehrosmoseanlage bereit zu stellen, bei der die Probleme vom Stand der Technik wenigstens teilweise gemindert oder beseitigt sind.

Diese Aufgabe wird durch die Merkmale des Patentanspruchs 1 gelöst.

Die Umkehrosmoseanlage gemäß der Erfindung umfasst wenigstens ein Umkehrosmosemodul (22, 23) mit einem Rohwassereingang (21), einem Konzentratausgang (24), einem Permeatausgang (25) sowie einem abstromseitig zum Permeatausgang angeordneten Permeatabfluss (29), eine das wenigstens eine Umkehrosmosemodul (22, 23) mit dem Rohwasser beaufschlagende Pumpe (18), eine Permeatrückführung (26), um das am Permeatausgang (25) austretende Permeat erneut durch das wenigstens eine Umkehrosmosemodul (22, 23) zu führen, zur Erfassung des Permeatdruckes P_{P} ein Drucksensor (33), der am abstromseitig zum Permeatausgang angeordneten Permeatabfluss (29) vorgesehen ist, und eine Steuereinrichtung (36).

Die Umkehrosmoseanlage zeichnet sich weiterhin dadurch aus, dass in der Permeatrückführung (26) ein Permeatregelventil (30) angeordnet ist zur Einstellung der Menge an Permeat, das entsprechend ganz oder teilweise an den Vorlauf der Pumpe (18) rückgeführt wird, dass an der Pumpe (18) oder zwischen Pumpe und Rohwassereingang (21) eine Druckregelungseinrichtung vorgesehen ist, die einen Rohwasserdruck (PR) in Abhängigkeit von einem vorbestimmten Permeatdruck (PP) am Permeatausgang (25) einstellt und dass die Druckregelungseinrichtung einen Frequenzumwandler (19) zur Ansteuerung der Pumpe (18) umfasst, derart, dass die Pumpe über einen Druckbereich, vorzugsweise 2 bar bis 140 bar, insbesondere 2 bar bis 80 bar, kontinuierlich so einstellbar ist, dass dem wenigstens einen Umkehrosmosemodul (22, 23) soviel Rohwasser zugeführt wird, wie entsprechend Permeat von den Endverbrauchern benötigt wird bzw. über die Permeatrückführung (26) rückgeführt wird.

Dadurch, dass ein Teil des Permeats in das Umkehrosmoseverfahren zurückgeführt wird, wird gewährleistet, dass das bzw. die Umkehrosmosemodul(e) permanent gespült werden, und zwar auch dann, wenn vom Endverbraucher kein

Permeat entnommen wird. Auf diese Weise wird das Versalzen der Umkehrosmose-Module verhindert. Zusätzlich eröffnen sich durch diese Permeatrückführung für die Umkehrosmoseanlage vielfältige Steuerungs- bzw. Regelungsmöglichkeiten. So lässt Sich durch eine teilweise Rückführung des Permeats auch die, von den Endverbrauchern angeforderte Permeatmenge einstellen.

Dadurch wird ein wirtschaftlicher Betrieb der Anlage gewährleistet. Es muss kein Permeat in einem Behälter zwischengespeichert und von dort an einen Endverbraucher weitergepumpt werden. Dies verringert den konstruktiven Aufwand. Da die Zwischenlagerung des Permeats nicht mehr erforderlich ist, kann das Wasser auch nicht mehr aufkeimen und es sind keine Einrichtungen zur Verhinderung der Verkeimung wie UV-Lampen oder Chemikalien notwendig.

Durch eine teilweise Rückführung des Permeats lässt sich auch der Salzgehalt am Ausgang der Umkehrosmosemodule regeln. Das ist von Vorteil wenn zum Beispiel sehr reines Wasser vom Endverbraucher gefordert wird oder wenn der Salzgehalt im Rohwasser Schwankungen unterworfen ist.

Durch die geregelte Permeatrückführung lässt sich auch die Ausbeute der Umkehrosmoseanlage erheblich steigern. Durch die erfindungsgemäße Umkehrosmoseanlage wird es möglich, die Permeatausbeute von den eingangs genannten Werten in Höhe von ca. 75 % auf Werte im Bereich von 85 bis 95 %, ja sogar bis zu 97 % zu steigern.

Wie bereits erwähnt, ist vorgesehen, dass die Permeatrückführung ein Regelventil umfasst, das eine vorbestimmte Menge des Permeats durch die Permeatrückführung leitet. Die notwendige Menge rückzuführendes Permeat kann mit Hilfe einer hierfür vorgesehen Einrichtung, beispielsweise ein oder mehrere Wasserzähler oder ein Drucksensor im Permeatstrom, in Abhängigkeit der vom Endverbraucher angeforderten Permeatmenge bestimmt werden.

Die rückzuführenden Permeatmenge kann auch mit Hilfe einer hierfür vorgesehen Einrichtung in Abhängigkeit der Ionenkonzentration I_{c} bestimmt werden. In einer zweckmäßigen Ausgestaltung der vorliegenden Erfindung wird die Ionenkonzentration I_{c} im Permeat über einen Leitwertsensor im Permeatausgang bestimmt. Bei einer besonders bevorzugten Ausführungsform der vorliegenden Erfindung kann zusätzlich eine Konzentratrückführung vorgesehen sein, um das am Konzentratausgang austretende Konzentrat ganz oder teilweise erneut durch das Umkehrosmosemodul zu führen. Durch diese Maßnahme werden die Regelungsmöglichkeiten der gesamten Anlage erhöht. Insbesondere können die Permeatmenge und der Salzgehalt im Permeat entsprechend den Anforderungen eingestellt werden.

In einer zweckmäßigen Ausführungsform umfasst die Konzentratrückführung ein zweites Regelventil, das eine vorbestimmten Menge des Konzentrats durch die Konzentratrückführung leitet.

Vorzugsweise ist eine Einrichtung vorgesehen, die die Menge des rückgeführten Konzentrats in Abhängigkeit von der vom Endverbraucher angeforderten Permeatmenge bestimmt. Diese Einrichtung kann beispielsweise durch einen oder mehrere Wasserzähler oder durch einen Drucksensor im Permeatstrom gebildet sein.

In einer weiteren vorteilhaften Ausführungsform kann zudem eine Einrichtung vorgesehen sein, die die Menge des rückgeführten Konzentrats in Abhängigkeit von der Ionenkonzentration I_{c} des Permeats bestimmt, beispielsweise ein Leitwertsensor im Permeatausgang.

Wie bereits erwähnt ist bei der erfindungsgemäßen Umkehrosmoseanlage auch an der Pumpe oder zwischen Pumpe und Rohwassereingang eine Druckregelungseinrichtung vorgesehen, die einen Rohwasserdruck P_{R} in Abhängigkeit von einem vorbestimmten Permeatdruck P_{P} am Permeatausgang einstellt. Durch diese Maßnahme wird dem Modul lediglich soviel Rohwasser zugeführt, wie eine entsprechende Menge an salzarmem Permeat am Permeatausgang benötigt wird. Dadurch wird kein überschüssiges Permeat produziert. Gleichzeitig wird weniger Rohwasser zugeführt.

Dabei wird der vorbestimmte Permeatdruck Pₚ durch die Pumpe an die Anforderungen nachschaltbarer Verbraucher bzw. einer erfindungsgemäß einstellbaren Rückführungsrate von Permeat und/oder Konzentrat angepasst werden.

Es ist vorgesehen, dass die Druckregelungseinrichtung der Umkehrosmoseanlage einen Frequenzumwandler zur Ansteuerung der Pumpe umfasst derart, dass die Pumpe über einen bestimmten Druckbereich, vorzugsweise 2 bar bis 140 bar insbesondere 2 bar bis 80 bar, kontinuierlich einstellbar ist. Die Verwendung eines Frequenzumwandlers ermöglicht eine verlustlose Regelung. Der Pumpe wird nur die Energie zugeführt, die sie benötigt. Es wird keine überflüssige Energie in Wärme umgewandelt.

In einer zweckmäßigen Ausführungsform der Umkehrosmoseanlage weist diese nach dem Rohwassereintritt eine Härtegrad-Überwachungseinrichtung auf, um die Rohwasserzufuhr bei Überschreitung eines vorbestimmten Härtegrades zu stoppen.

Insbesondere ist es vorteilhaft, wenn Einrichtungen vorgesehen sind, insbesondere Absperrventile, um die Umkehrosmosemodule separat zu- oder abzuschalten.

In einer besonders vorteilhaften Ausführungsform ist in der Umkehrosmoseanlage eine Überbrückungsleitung mit einem dritten Regelventil vorgesehen, die zwischen dem Ausgang der Pumpe und dem Permeatabfluss angeordnet ist. Die Überbrückungsleitung umfasst vorzugsweise ein drittes Regelventil, dass eine vorbestimmte Menge gefiltertes Rohwasser durch die Überbrückungsleitung leitet.

Nach einem besonders vorteilhaften Aspekt der vorliegenden Erfindung kann dem Permeatabfluss ein weiterer Leitwertsensor zugeordnet sein. Dieser Leitwertsensor kann vorgesehen sein, um die Menge gefiltertes Rohwasser durch die Überbrückungsleitung in Abhängigkeit vom Leitwert zu bestimmen.

In einer weiteren vorteilhaften Ausführungsform der vorliegenden Erfindung ist der dem Permeatausgang zugeordnete Leitwertsensor vorgesehen, um die Menge gefiltertes Rohwasser durch die Überbrückungsleitung in Abhängigkeit vom Leitwert zu bestimmen.

In einer zweckmäßigen Ausführungsform der Erfindung ist vorgesehen, dass die Pumpe als Plungerpumpe ausgebildet ist. Die Plungerpumpe weist praktisch keine oder nur eine sehr geringe Wärmeentwicklung auf, sodass dadurch auch das Wasser nicht erwärmt werden kann. Dadurch wird die Keimbildung verhindert oder zumindest unterdrückt.

Weiterhin haben Plungerpumpen den Vorteil, dass sie kontinuierlich über den großen Druckbereich von 2 bar bis 140 bar einstellbar sind.

Die Erfindung wird im Folgenden anhand von Ausfülu-ungsbeispielen und unter Bezugnahme auf die beiliegenden Zeichnungen weiter erläutert.

Hierbei zeigen:
Fig. 1 eine erste vorteilhafte Ausführungsform einer Umkehrosmoseanlage gemäß der Erfindung,
Fig. 2 eine abgewandelte Ausführungsform der erfindungsgemäßen Umkehrosmoseanlage nach Fig. 1,
Fig. 3 eine abgewandelte Ausführungsform der Umkehrosmoseanlage gemäß der Erfindung nach Fig. 2.

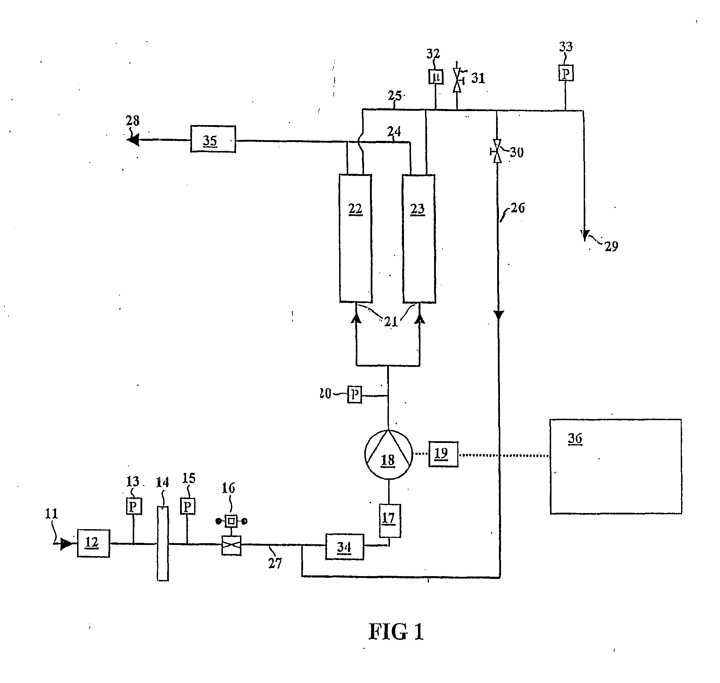

Fig. 1 zeigt eine erste vorteilhafte Ausführungsform der Umkehrosmoseanlage gemäß der Erfindung.

Einem Rohwassereintritt 11 in eine Rohwasserleitung 27 sind eine Härtegrad-Überwachungseinrichtung 12, ein erster Drucksensor 13, ein Filter 14, ein zweiter Drucksensor 15 und ein Magnetventil 16 sowie ein Wasserzähler 34 und ein Druckschalter 17 nachgeschaltet. Eine nachfolgende Pumpe 18 ist mit einem stufenlos einstellbaren Frequenzumrichter 19 gekoppelt. Dem Ausgang der Pumpe 18 ist ein dritter Drucksensor 20 zugeordnet.

Der Ausgang der Pumpe 18 ist mit einem Rohwassereintritt 21 wenigstens eines, vorzugsweise einer Mehrzahl parallel geschalteter Umkehrosmosemodule 22 und 23 gekoppelt. Die Umkehrosmosemodule 22 und 23 weisen außerdem einen Konzentratausgang 24 und einen Permeatausgang 25 auf. Dem Konzentratausgang 24 sind ein Wasserzähler 35 und ein Konzentratabfluss 28 nachgeschaltet. Dem Permeatausgang 25 sind ein Leitwertsensor 32, eine Zapfhahn 31, eine Permeatrückführung 26 und ein weiterer Drucksensor 33 nachgeschaltet. Anschließend wird das Permeat einem Permeatabfluss 29 zugeführt, von dem es beispielsweise auf ein Permeatleitungssystem verteilt werden kann. Die Permeatrückführung 26 ist über ein Regelventil 30 mit der Rohwasserleitung 27 verbunden. Die Umkehrosmoseanlage lässt sich über eine Steuereinrichtung 36 steuern bzw. regeln.

Über den Rohwassereintritt 11 wird der Anlage Rohwasser zugeführt, das üblicherweise in einer Entiärtungsanlage entkalkt wurde. Die Härtegradüberwachungseinrichtung 12 ist dazu vorgesehen, den Härtegrad des Rohwassers zu erfassen, sodass bei einer Überschreitung eines vorbestünmten Grenzwertes die weitere Zufuhr von Rohwasser, beispielsweise durch Schließen des Magnetventils 16, automatisch oder manuell unterbunden werden kann. Vorzugsweise wird bei Überschreiten des Wertes 1° dH die Umkehrosmoseanlage automatisch abgeschaltet. Auf diese Weise wird verhindert, dass das Wasser mit einem höheren Härtegrad in die Umkehrosmosemodule 22 und 23 gelangt Dies hätte zur Folge, dass die Umkehrosmosemodule verstopfen würden. Der Filter 14 in der Rohwasserleitung 27 sorgt dafür, dass Partikel aus dem Rohwasser abgeschieden werden, die die Pumpe 18 sowie die Umkehrosmosemodule 22 und 23 verunreinigten, verstopfen oder beschädigen könnten. Durch die Verwendung der Härtegrad-Übeixvachungseinrichtung 12 und des Filters 14 wird der gesamte Wartungsaufwand der Anlage reduziert. Das Magnetventil 16 kann mit Abschalten der Anlage geschlossen werden, um beispielsweise ein Spülen der Anlage zu ermöglichen.

Die Pumpe 18 dient dazu, das Rohwasser mit Druck, in der Größenordnung 2 bar bis 140 bar, insbesondere 2 bar bis 80 bar, in die Umkehrosmosemodule 22 und 23 zu pressen. Die Pumpe 18 ist stufenlos einstellbar ausgeführt und kann mit einem stufenlos einstellbaren Frequenzumrichter 19 zusammenwirken. Die stufenlose Einstellbarkeit kann für die Steuerung bzw. Regelung der Permeatmenge genutzt werden. Die Pumpe 18 wird so eingestellt, dass den Umkehrosmosemodulen 22 und 23 soviel Rohwasser zugeführt wird, wie entsprechend Permeat von den Endverbrauchern benötigt bzw. erfindungsgemäß rückgeführt wird. Dadurch ist eine Zwischenlagerung des Permeats in einem Behälter nicht erforderlich. Somit wird auch eine Keimbildung wie sie in solchen Behältern auftreten kann unterbunden. Der Druck am Ausgang der Pumpe 18 kann beispielsweise in Abhängigkeit von den Werten eingestellt werden, die durch die Drucksensoren 20 und 33, den Leitwertsensor 32 und die Wasserzähler 34 und 35 erfasst werden. Die Umkehrosmosemodule 22 und 23 sind vorzugsweise jeweils einzeln zu- und abschaltbar, in Abhängigkeit der geforderten Permeatmenge.

Über das Permeatregelventil 30 in der Permeatlückfuhrung 26 kann vorzugsweise automatisch, aber auch manuell eingestellt werden, welche Menge an Permeat an den Vorlauf der Pumpe 18 zurückgeführt wird. Durch die steuer- bzw. regelbare Permeatrückführung 26 werden die Steuerungs- bzw. Regelungsmöglichkeiten für den Salzgehalt in der Umkehrosmoseanlage und die dem Permatabfluss 29 zugeführte Permeatmenge erhöht.

Durch die Permeatrückführung 20 ist insbesondere die Möglichkeit gegeben, den Salzgehalt im Permeat sehr niedrig zu halten. Das ist von Vorteil wenn zum Beispiel sehr reines Wasser vom Endverbraucher gefordert wird oder der Salzgehalt im Rohwasser Schwankungen unterworfen ist. Durch die Rückführung einer entsprechenden Permeatmenge kann der Salzgehalt im Permeat dann innerhalb vorbestimmter Unter- bzw. Obergrenzen eingestellt werden. Des Weiteren kann vorgegeben werden, dass der Salzgehalt im Permeat einen vorbestimmten Wert nicht über- oder unterschreitet. Die Steuerung bzw. Regelung des Permeatrückflusses erfolgt in Abhängigkeit des durch den Leitwertsensor 32 am Penneatausgang 25 erfassten Leitwertes.

Gleichzeitig können durch die Peilneatrückfühiung die Umkehrosmosemodule 22 und 23 gespült werden, auch wenn vom Endverbraucher nur wenig oder kein Permeat entnommen wird. Auf diese Weise wird ein Versalzen der Umkehrosmose-Module verhindert.

Des Weiteren lässt sich über die Permeatrückführung 26 beispielsweise auch die, an den Permeatabfluss 29 bzw. die Endverbraucher angelieferte Permeatmenge einstellen. Die an den Endverbraucher abgegebene Permeatmenge ergibt sich aus der Differenz der vom Wasserzähler 34 in der Rohwasserleitung 27 erfassten Menge an gefiltertem Rohwasser abzüglich der vom Wasserzähler 35 am Konzentratabfluss 28 erfassten Menge verworfenes Konzentrat. Die an den Wasserzählern 34, 35 erfassten Wassermengen, die vorzugsweise automatisch an die Steuereinrichtung 36 übermittelt werden, können dazu dienen, die Permeatmenge kontinuierlich zu regeln. Als weitere Regelgrößen für die Pumpe 18 und/oder das Regelventil 30, die die an den Endverbraucher abgegebene Permeatmenge einstellen, kann der Druck am Permeatabfluss 29 dienen, der über den Drucksensor 33 erfasst wird.

Alle Komponenten zur Steuerung bzw. Regelung der Umkehrosmoseanlage und alle Komponenten zur Messwerterfassung sind vorzugsweise mit einer zentralen Steuereinrichtung 36 verbunden. Die erfassten Messwerte sämtlicher Sensoren werden der Steuereinrichtung 36 zugeführt. Auf der Grundlage der Messwerte werden der Frequenzumwandler 19 und vorzugsweise das Regelventil 30 von der Steuereinrichtung 36 angesteuert und eingestellt, insbesondere geregelt.

In besonders vorteilhafter Ausführung ist die Steuereinrichtung 36 mit einer Anzeigeeinrichtung zur ständigen Überwachung der Anlage bzw. der einzelnen Parameter und einer Einrichtung zur Archivierung der Daten ausgestattet. Die Steuereinrichtung 36 lässt sich beispielsweise mit einem PC realisieren. Beispielsweise kann auch eine SPS verwendet werden. Über eine Schnittstelle für eine vernetzte Anbindung der Anlage können sämtliche Daten und Störfälle unmittelbar und unverzüglich von der Steuereinrichtung 36 an eine zentrale Leitstelle weitergeleitet werden.

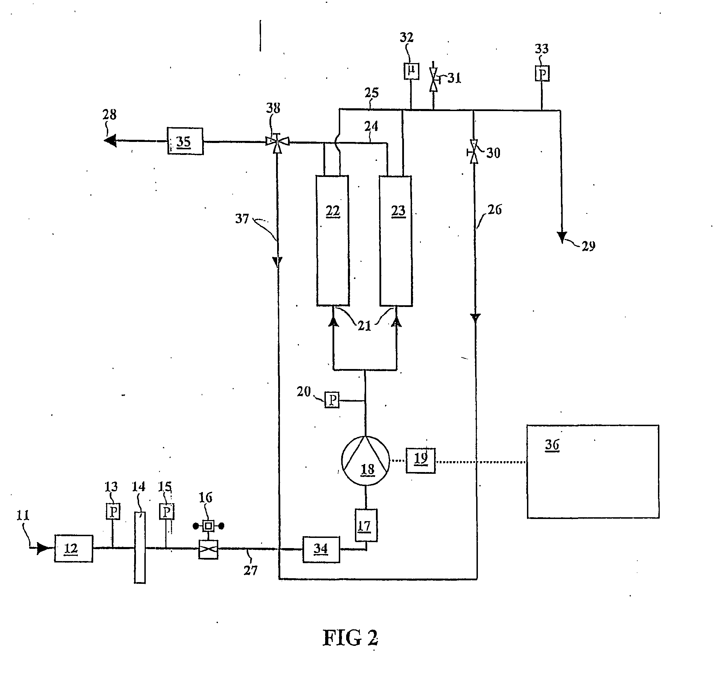

In einer bevorzugten abgewandelten Ausfülarungsform der erfindungsgemäßen Umkehrosmoseanlage nach Fig. 1 umfasst die Umkehrosmoseanlage neben der Permeati-ückführung 26 zusätzlich eine Konzentratruckfiihrung 37 (Fig. 2). Dadurch werden die Steuerungs- und Regelungsmöglichkeiten der Umkehrosmoseanlage erheblich erweitert. Mit einem Regelventil 38, das vorzugsweise als 2-Wege-Regelventil ausgebildet ist, kann vorzugsweise automatisch, aber auch manuell eingestellt werden, welche Menge des Konzentrats über die Konzentratrückrührung 37 an den Vorlauf der Pumpe 18 zurückgeführt wird. Der übrige Anteil des Konzentrats wird über den Wasserzähler 35 dem Konzentratabtluss 28 zugeführt und üblicherweise als Abfall verworfen.

Über die Konzentratrückführung 37 lassen sich beispielsweise die Permeatmenge sowie der Salzgehalt im Permeat einstellen. Wird zum Beispiel ein erhöhter Salzgehalt im Permeat toleriert, so lässt sich durch die Rückführung von Konzentrat bei einem konstanten Permeatstrom zudem Rohwasser einsparen. Des Weiteren können durch die Konzentratrückführung die Umkehrosmosemodule 22 und 23 gespült werden, auch wenn vom Endverbraucher sehr viel Permeat entnommen wird. Auf diese Weise wird ein Versalzen der Umkehrosmosemodule verhindert. Die Steuerungs- bzw. Regelungsmöglichkeiten durch die Permeat- und die Konzentratrückführung 26, 37 beschränken sich jedoch nicht nur auf die hier genannten Beispiele.

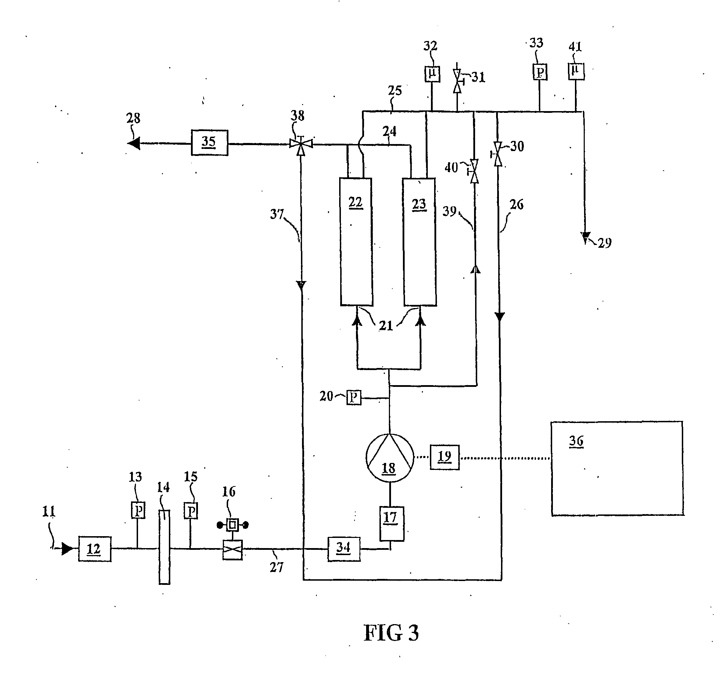

Fig. 3 zeigt eine abgewandelte Ausführungsform der erfindungsgemäßen Umkehrosmoseanlage gemäß Fig. 2. Die Umkehrosmoseanlage gemäß Fig. 2 wurde um eine Verschneideeinrichtung erweitert. Die Verschneideeinrichtung umfasst eine Überbrückungsleitung 39 mit einem Regelventil 40. Dadurch werden insbesondere die Umkehrosmosemodule 22 und 23 überbrückt, sodass ein Teil des gefilterten Rohwassers direkt dem Permeatabfluss 29 und/oder der Permeatrückführung 26 zugeführt werden kann. Damit wird eine weitere Steuerungs- bzw. Regelungsmöglichkeit für die Umkehrosmoseanlage bereitgestellt. Ein Teil des gefilterten Rohwassers kann nun an den Umkehrosmosemodulen 22 und 23 vorbeigeführt werden, wenn ein entsprechend vorbestimmter Salzgehalt im Wasser toleriert werden kann. Je nach tolerierbarem Salzgehalt, kann dann mittels des Regelventils 40 das Verhältnis von aus den Umkehrosmosemodulen 22 und 23 austretendem Permeat und dem durch die Überbrückungsleitung 39 geführten Rohwasser manuell oder automatisch eingestellt werden. Die Überbrückungsleitung 39 kann vom Ausgang der Pumpe 18 wahlweise auf den Permeatausgang 25 oder auf den Permeatabfluss 29 (hier nicht dargestellt) geführt werden. Mit der Verschneideeinrichtung wird eine weitere Möglichkeit geschaffen, den konstruktiven und technologischen Aufwand für die Umkehrosmoseanlage optimal an die jeweils vorliegenden Anforderungen anzupassen. Ein weiterer Vorteil der Verschneideeinrichtung ist, dass die Durchflussrate der Umkehrosmosemodule 22 und 23 wesentlich geringer sein kann als die der gesamten Umkehrosmoseanlage. Dadurch können unter Umständen die Wartungsintervalle der Umkehrosmosemodule erhöht werden.

Für die Steuerung bzw. Regelung der Verschneideeinrichtung wird vorzugsweise der Leitwert nach der Zuleitung des Rohwassers in den Permeatstrom gemessen. Die Leitwertmessung des verschnittenen Permeats erfolgt vorzugsweise mit einem Leitwertsensor 41, der dem Permeatabfluss 29 zugeordnet ist. Weiterhin kann es vorteilhaft sein, zusätzlich auch den aktuellen Leitwert des aus den Umkehrosmosemodulen 22 und 23 ausgegebenen Permeats vor der Verschneidung mit gefiltertem Rohwasser zu erfassen. Die Einstellung kann dadurch verbessert werden, da anhand der Qualität des aus den Umkehrosmosemodulen 22 und 23 austretenden Permeats, die mutmaßlich mögliche Zugabe von gefiltertem Rohwasser aus der Überbrückungsleitung 39 abgeschätzt werden kann. Über den Leitwert des verschnittenen Permeats kann dann eine Überprüfung erfolgen. Der Leitwert des aus den Umkehrosmosemodulen 22 und 23 austretendenden Permeats wird vorzugsweise mit dem Leitwertsensor 32 bestimmt.

In der erfindungsgemäßen Umkehrosmoseanlage gemäß Fig. 2 und Fig. 3 sind alle Komponenten zur Steuerung bzw. Regelung der Umkehrosmoseanlage und alle Komponenten zur Messwerterfassung vorzugsweise mit einer zentralen Steuereinrichtung 36 verbunden. Die erfassten Messwerte sämtlicher Sensoren werden der Steuereinrichtung zugeführt. Auf der Grundlage der Messwerte werden der Frequenzumwandler 19 und vorzugsweise alle Regelventile von der Steuereinrichtung angesteuert und eingestellt, insbesondere geregelt.

Weiterhin sei darauf hingewiesen, dass die erfindungsgemäße Anlage einen sehr geringen Platzbedarf hat. Schließlich kann mit dieser Anlage die für Keimbildung relevante DIN 6022 problemlos eingehalten werden. Auch die gemäß der Trinkwasserverordnung relevante DIN 2000, die ebenfalls die Keimbildung betrifft, kann mit der erfindungsgemäßen Umkehrosmoseanlage erfüllt werden.

Die erfindungsgemäße Umkehrosmoseanlage kann in der Industrie verwendet werden. Für zahlreiche Herstellungsverfahren und Produkte wird Wasser mit einem niedrigen Salzgehalt benötigt. Insbesondere für die Pharmaindustrie ist diese Umkehrosmoseanlage vorteilhaft geeignet. Neben dem, durch die Permeatrückführung 26 extrem niedrig einstellbaren Salzgehalt ist auch die Keimbildung sehr gering, was insbesondere für pharmazeutische Produkte wichtig ist.

Auch in Krankenhäusern kann die erfindungsgemäße Umkehrosmoseanlage verwendet werden, wo ebenfalls die niedrige Keimbildung neben dem niedrigen Salzgehalt eine wichtige Rolle spielt. Schließlich kann die erfindungsgemäße Umkehrosmoseanlage als Meerwasser-Aufbereitungsanlage verwendet werden, so dass auf diese Weise Trinkwasser gewonnen werden kann.

### Bezugszeichenliste

- 11: Rohwassereintritt
- 12: Härtegradüberwachungseinrichtung
- 13: Drucksensor
- 14: Filter
- 15: Drucksensor
- 16: Magnetventil
- 17: Druckschalter
- 18: Pumpe
- 19: Frequenzumrichter
- 20: Drucksensor
- 21: Rohwassereingang
- 22: Umkehrosmosemodul
- 23: Umkehrosmosemodul
- 24: Konzentratausgang
- 25: Permeatausgang
- 26: Permeatrückführung
- 27: Rohwasserleitung
- 28: Konzentratabfluss
- 29: Permeatabfluss
- 30: Regelventil (Permeatrückführung)
- 31: Zapfhahn
- 32: Leitwertsensor
- 33: Drucksensor
- 34: Wasserzähler (Rohwasserleitung)
- 35: Wasserzähler (Konzentratabfluss)
- 36: Steuereinrichtung
- 37: Konzentratrückführung
- 38: Regelventil (Konzentratrückführung)
- 39: Überbrückungsleitung
- 40: Regelventil (Überbrückungsleitung)
- 41: Leitwertsensor

## Patentansprüche

1. Umkehrosmoseanlage für Rohwasser, insbesondere Stadt- oder Brunnenwasser, zur Gewinnung von salzarmem Permeat oder Diluat, umfassend
- wenigstens ein Umkehrosmosemodul (22, 23) mit einem Rohwassereingang (21), einem Konzentratausgang (24), einem Permeatausgang (25) sowie einem abstromseitig zum Permeatausgang angeordneten Permeatabfluss (29),
- eine das wenigstens eine Umkehrosmosemodul (22, 23) mit dem Rohwasser beaufschlagende Pumpe (18),
- eine Permeatrückführung (26), um das am Permeatausgang (25) austretende Permeat erneut durch das wenigstens eine Umkehrosmosemodul (22, 23) zu führen,
- zur Erfassung des Permeatdruckes P_{P} ein Drucksensor (33), der am abstromseitig zum Permeatausgang angeordneten Permeatabfluss (29) vorgesehen ist, und
- eine Steuereinrichtung (36),
**dadurch gekennzeichnet,**
**dass** in der Permeatrückführung (26) ein Permeatregelventil (30) angeordnet ist zur Einstellung der Menge an Permeat, das entsprechend ganz oder teilweise an den Vorlauf der Pumpe (18) rückgeführt wird,
**dass** an der Pumpe (18) oder zwischen Pumpe und Rohwassereingang (21) eine Druckregelungseinrichtung vorgesehen ist, die einen Rohwasserdruck (PR) in Abhängigkeit von einem vorbestimmten Permeatdruck (PP) am Permeatausgang (25) einstellt und
**dass** die Druckregelungseinrichtung einen Frequenzumwandler (19) zur Ansteuerung der Pumpe (18) umfasst, derart, dass die Pumpe über einen Druckbereich, vorzugsweise 2 bar bis 140 bar, insbesondere 2 bar bis 80 bar, kontinuierlich so einstellbar ist, dass dem wenigstens einen Umkehrosmosemodul (22, 23) soviel Rohwasser zugeführt wird, wie entsprechend Permeat von den Endverbrauchern benötigt wird bzw. über die Permeatrückführung (26) rückgeführt wird.

2. Umkehrosmoseanlage nach Anspruch 1, **dadurch gekennzeichnet, dass** eine Einrichtung vorgesehen ist, die die Menge des rückgeführten Permeats in Abhängigkeit von der Ionenkonzentration I_{c} des Permeats bestimmt.

3. Umkehrosmoseanlage nach Anspruch 1 oder 2, **dadurch gekennzeichnet, dass** dem Permeatausgang (25) ein Leitwertsensor (32) zugeordnet ist.

4. Umkehrosmoseanlage nach einem oder mehreren der vorhergehenden Ansprüche, **dadurch gekennzeichnet, dass** eine Konzentratrückführung (37) vorgesehen ist, um das am Konzentratausgang (24) austretende Konzentrat ganz oder teilweise erneut durch das Umkehrosmosemodul (22, 23) zu führen.

5. Umkehrosmoseanlage nach Anspruch 4,
**dadurch gekennzeichnet, dass** die Konzentratrückführung ein zweites Regelventil (38) umfasst, das eine vorbestimmten Menge des Konzentrats durch die Konzentratrückführung (37) leitet.

6. Umkehrosmoseanlage nach Anspruch 4 oder 5,
**dadurch gekennzeichnet, dass** eine Einrichtung vorgesehen ist, die die Menge des rückgeführten Konzentrats in Abhängigkeit von der vom Endverbraucher angeforderten Permeatmenge bestimmt.

7. Umkehrosmoseanlage nach einem oder mehreren der Ansprüche 4 bis 6,
**dadurch gekennzeichnet, dass** eine Einrichtung vorgesehen ist, die die Menge des rückgeführten Konzentrats in Abhängigkeit von der Ionenkonzentration I_{c} des Permeats bestimmt.

8. Umkehrosmoseanlage nach einem oder mehreren der vorhergehenden Ansprüche, **dadurch gekennzeichnet, dass** diese nach dem Rohwassereintritt (11) eine Härtegrad-Überwachungseinrichtung (12) aufweist, um die Rohwasserzufuhr bei Überschreitung eines vorbestimmten Härtegrades zu stoppen.

9. Umkehrosmoseanlage nach einem oder mehreren der vorhergehenden Ansprüche, **dadurch gekennzeichnet, dass** Einrichtungen, insbesondere Absperrventile vorgesehen sind, um die Umkehrosmose-Module separat zuoder abzuschalten.

10. Umkehrosmoseanlage nach einem oder mehreren der vorhergehenden Ansprüche, **dadurch gekennzeichnet, dass** diese eine Überbrückungsleitung (39) umfasst, die zwischen dem Ausgang der Pumpe (18) und dem Permeatabfluss (29) angeordnet ist.

11. Umkehrosmoseanlage nach Anspruch 16,
**dadurch gekennzeichnet, dass** die Überbrückungsleitung (39) ein drittes Regelventil (40) umfasst, dass eine vorbestimmte Menge gefiltertes Rohwasser durch die Überbrückungsleitung (39) leitet.

12. Umkehrosmoseanlage nach Anspruch 16 und 17,
**dadurch gekennzeichnet, dass** dem Permeatabfluss (29) ein weiterer Leitwertsensor (41) zugeordnet ist.

13. Umkehrosmoseanlage nach einem oder mehreren der Ansprüche 16 bis 18,
**dadurch gekennzeichnet, dass** der dem Permeatabfluss (29) zugeordnete Leitwertsensor (41) vorgesehen ist, um die Menge gefiltertes Rohwasser durch die Überbrückungsleitung (39) in Abhängigkeit vom Leitwert zu bestimmen.

14. Umkehrosmoseanlage nach einem oder mehreren der Ansprüche 16 bis 19,
**dadurch gekennzeichnet, dass** der dem Permeatausgang (25) zugeordnete Leitwertsensor (32) vorgesehen ist, um die Menge gefiltertes Rohwasser durch die Überbrückungsleitung (39) in Abhängigkeit vom Leitwert zu bestimmen.

15. Umkehrosmoseanlage nach einem oder mehreren der vorhergehenden Ansprüche, **dadurch gekennzeichnet, dass** die Pumpe (18) als Plungerpumpe ausgebildet ist.

## Claims

1. A reverse osmosis installation for raw water, in particular urban water or well water, for recovering low-salt permeate or diluate, comprising
- at least one reverse osmosis module (22, 23) including a raw water inlet (21), a concentrate outlet (24), a permeate outlet (25) as well as a permeate drain (29) arranged on the downstream side of the permeate outlet,
- a pump (18) supplying the at least one reverse osmosis module (22, 23) with raw water,
- a permeate recirculation (26) for recirculating the permeate exiting at the permeate outlet (25) through the at least one reverse osmosis module (22, 23),
- a pressure sensor (33) provided at the permeate drain (29) arranged on the downstream side of the permeate outlet for detecting the permeate pressure Pp, and
- a control means (36).
**characterized in that**
a permeate regulating valve (30) is arranged in the permeate recirculation (26) for adjusting the amount of permeate which is correspondingly recirculated entirely or partly to the flow line of the pump (18),
a pressure regulation means is provided at the pump (18) or between the pump and the raw water inlet (21) which adjusts a raw water pressure (PR) at the permeate outlet (25) as a function of a predetermined permeate pressure (PP), and
the pressure regulation means comprises a frequency transformer (19) for driving the pump (18) such that the pump is continuously adjustable over a pressure range, preferably from 2 to 140 bar, in particular from 2 to 80 bar, such that the at least one reverse osmosis module (22, 23) is supplied with as much raw water as permeate is correspondingly required by the end consumers, respectively is recirculated via the permeate recirculation (26).

2. The reverse osmosis installation according to claim 1, **characterized in that** a means is provided which determines the amount of the recirculated permeate as a function of the ion concentration I_{C} of the permeate.

3. The reverse osmosis installation according to claim 1 or 2, **characterized in that** a conductance sensor (32) is associated to the permeate outlet (25).

4. The reverse osmosis installation according to one or more of the preceding claims, **characterized in that**
a concentrate recirculation (37) is provided for guiding the concentrate exiting at the concentrate outlet (24) entirely or partly through the reverse osmosis module (22, 23).

5. The reverse osmosis installation according to claim 4, **characterized in that** the concentrate recirculation comprises a second regulating valve (38) guiding a predetermined amount of concentrate through the concentrate recirculation (37).

6. The reverse osmosis installation according to claim 4 or 5, **characterized in that**
a means is provided which determines the amount of the recirculated concentrate as a function of the permeate amount requested by the end consumer.

7. The reverse osmosis installation according to one or more of claims 4 to 6, **characterized in that** a means is provided which determines the amount of the recirculated concentrate as a function of the ion concentration I_{c} of the permeate.

8. The reverse osmosis installation according to one or more of the preceding claims, **characterized in that** same comprises a hardness degree monitoring means (12) downstream of the raw water inlet (11) for stopping the raw water supply when a predetermined hardness degree is exceeded.

9. The reverse osmosis installation according to one or more of the preceding claims, **characterized in that** means, in particular shut-off valves are provided for separately switching on or off the reverse osmosis modules.

10. The reverse osmosis installation according to one or more of the preceding
claims, **characterized in that** same comprises a bridging line (39) arranged between the outlet of the pump (18) and the permeate drain (29).

11. The reverse osmosis installation according claim 10, **characterized in that** the
bridging line (39) comprises a third regulating valve (40) guiding a predetermined amount of filtered raw water through the bridging line (39).

12. The reverse osmosis installation according claims 10 and 11, **characterized in**
**that** a further conductance sensor (41) is associated to the permeate drain (29).

13. The reverse osmosis installation according to one or more of claims 10 to 12,
**characterized in that** the conductance sensor (41) associated to the permeate drain (29) is provided for determining the amount of filtered raw water through the bridging line (39) as a function of the conductance.

14. The reverse osmosis installation according to one or more of claims 10 to 13,
**characterized in that** the conductance sensor (32) associated to the permeate outlet (25) is provided for determining the amount of filtered raw water through the bridging line (39) as a function of the conductance.

15. The reverse osmosis installation according to one or more of the preceding
claims, **characterized in that** the pump (18) is configured to be a plunger pump.

## Revendications

1. Installation d'osmose inverse pour de l'eau brute, en particulier de l'eau de ville ou de puits, pour la récupération de perméat ou de diluat pauvre en sels, comportant :
- au moins un module d'osmose inverse (22, 23) comportant une entrée d'eau brute (21), une sortie de concentré (24), une sortie de perméat (25) ainsi qu'un écoulement de perméat (29) disposé en aval de la sortie de perméat,
- une pompe (18) alimentant l'au moins un module d'osmose inverse (22, 23) en eau brute,
- un retour de perméat (26) pour reconduire le perméat qui sort à la sortie de perméat (25) par l'au moins un module d'osmose inverse (22, 23),
- pour la saisie de la pression de perméat Pp, un capteur de pression (33) qui est prévu au niveau de l'écoulement de perméat (29) disposé en aval de la sortie de perméat, et
- un dispositif de commande (36),
**caractérisée en ce que**
une vanne de régulation de perméat (30) est disposée dans le retour de perméat (26) pour régler la quantité de perméat qui est retourné en conséquence en tout ou en partie vers l'arrivée de la pompe (18),
un dispositif de régulation de pression, qui règle une pression d'eau brute (PR) au niveau de la sortie de perméat (25) en fonction d'une pression de perméat prédéterminée (PP), est prévu au niveau de la pompe (18) ou entre la pompe et l'entrée d'eau brute (21), et
le dispositif de régulation de pression comporte un convertisseur de fréquence (19) pour la commande de la pompe (18) de telle sorte que la pompe soit réglable en continu sur une plage de pression, de préférence de 2 bars à 140 bars, en particulier de 2 bars à 80 bars, de telle manière que soit amenée à l'au moins un module d'osmose inverse (22, 23) autant d'eau brute que du perméat est requis en conséquence par les consommateurs finaux ou est retourné via le retour de perméat (26).

2. Installation d'osmose inverse selon la revendication 1, **caractérisée en ce qu'**est prévu un dispositif qui détermine la quantité du perméat retourné en fonction de la concentration ionique **I**_{c} du perméat.

3. Installation d'osmose inverse selon la revendication 1 ou 2, **caractérisée en ce qu'**un capteur de conductance (32) est affecté à la sortie de perméat (25).

4. Installation d'osmose inverse selon l'une ou plusieurs des revendications précédentes, **caractérisée en ce qu'**est prévu un retour de concentré (37) pour reconduire en tout ou en partie par le module d'osmose inverse (22, 23) le concentré qui sort à la sortie de concentré (24).

5. Installation d'osmose inverse selon la revendication 4,
**caractérisée en ce que** le retour de concentré comporte une deuxième vanne de régulation (38) qui dirige une quantité prédéterminée du concentré par le retour de concentré (37).

6. Installation d'osmose inverse selon la revendication 4 ou 5,
**caractérisée en ce qu'**est prévu un dispositif qui détermine la quantité du concentré retourné en fonction de la quantité de perméat demandée par le consommateur final.

7. Installation d'osmose inverse selon l'une ou plusieurs des revendications 4 à 6, **caractérisée en ce qu'**est prévu un dispositif qui détermine la quantité du concentré retourné en fonction de la concentration ionique I_{c} du perméat.

8. Installation d'osmose inverse selon l'une ou plusieurs des revendications précédentes, **caractérisée en ce que** celle-ci présente en aval de l'entrée d'eau brute (11) un dispositif de surveillance de degré de dureté (12) pour arrêter l'arrivée d'eau brute en cas de dépassement d'un degré de dureté prédéterminé.

9. Installation d'osmose inverse selon l'une ou plusieurs des revendications précédentes, **caractérisée en ce que** sont prévus des dispositifs, en particulier des vannes d'arrêt, pour mettre en circuit ou hors circuit séparément les modules d'osmose inverse.

10. Installation d'osmose inverse selon l'une ou plusieurs des revendications précédentes, **caractérisée en ce que** celle-ci comporte une conduite de dérivation (39) qui est disposée entre la sortie de la pompe (18) et l'écoulement de perméat (29).

11. Installation d'osmose inverse selon la revendication 10,
**caractérisée en ce que** la conduite de dérivation (39) comporte une troisième vanne de régulation (40) qui dirige une quantité prédéterminée d'eau brute filtrée par la conduite de dérivation (39).

12. Installation d'osmose inverse selon la revendication 10 et 11,
**caractérisée en ce qu'**un capteur de conductance supplémentaire (41) est affecté à l'écoulement de perméat (29).

13. Installation d'osmose inverse selon l'une ou plusieurs des revendications 10 à 18, **caractérisée en ce que** le capteur de conductance (41) affecté à l'écoulement de perméat (29) est prévu pour déterminer la quantité d'eau brute filtrée passant par la conduite de dérivation (39) en fonction de la conductance.

14. Installation d'osmose inverse selon l'une ou plusieurs des revendications 10 à 13, **caractérisée en ce que** le capteur de conductance (32) affecté à la sortie de perméat (25) est prévu pour déterminer la quantité d'eau brute filtrée passant par la conduite de dérivation (39) en fonction de la conductance.

15. Installation d'osmose inverse selon l'une ou plusieurs des revendications précédentes, **caractérisée en ce que** la pompe (18) est conçue comme pompe à piston plongeur.
